# FASCICULE DE BREVET EUROPEEN

(11) **EP 4 276 264 B1**
(45) Date de publication et mention de la délivrance du brevet: **27.08.2025**
(21) Numéro de dépôt: 23172858.5
(22) Date de dépôt: 11.05.2023
(51) Int. Cl.: E05B 83/24, E05B 85/26, E05B 81/14, E05B 79/20, E05B 81/20

(54) **AGENCEMENT DE SERRURE POUR CAPOT DE VÉHICULE AUTOMOBILE**
SCHLOSSANORDNUNG FÜR DIE MOTORHAUBE EINES KRAFTFAHRZEUGS
LOCK ARRANGEMENT FOR A MOTOR VEHICLE BONNET

(30) Priorité: 13.05.2022 FR 2204574; 24.05.2022 FR 2204965
(43) Date de publication de la demande: 15.11.2023
(73) Titulaire: Akwel Vigo Spain SL, 36213 Vigo Pontevedra (ES)
(72) Inventeur: REGUEIRO BLANCO, Agustin, 15008 A Coruna (ES); GONZALEZ NOVO, Javier, 36331 Vigo (ES); VAZQUEZ CARBALLO, Oscar José, 36201 Vigo (ES); COUTO MAQUIEIRA, Javier Delmiro, 36157 Pontevedra (ES); MARTINEZ NOVAS, David, 36207 Vigo Pontevedra (ES)
(74) Mandataire: Renard, Alexis

(56) Documents cités:
- FR-A1- 2 991 365
- US-A1- 2016 168 883

## Description

La présente invention concerne un agencement de serrure pour un ouvrant de véhicule automobile, tel qu'un capot avant de véhicule automobile.

Il est connu en soi de disposer à l'avant d'un véhicule automobile à moteur à combustion interne un compartiment logeant le moteur qui est fermé par un ouvrant couramment désigné par capot.

Généralement, un tel capot comporte un bord fixe monté pivotant sur la carrosserie au moyen de charnières connues en soi et un bord libre pourvu d'au moins une gâche agencée pour coopérer avec un agencement de serrure prévu sur la carrosserie et permettant de maintenir le capot en position fermée.

Afin de répondre aux exigences élevées dans le domaine de la sécurité automobile, l'agencement de serrure est actionnable en deux temps afin d'empêcher que le capot avant puisse s'ouvrir de façon intempestive pendant le roulage du véhicule automobile et puisse obstruer brutalement la vue du conducteur automobile.

Dans les véhicules traditionnels comprenant un moteur à combustion interne logé dans le capot avant, l'utilisateur du véhicule automobile procède tout d'abord à une première manœuvre qui s'effectue à distance du capot et par actionnement d'une manette logée à l'intérieur de l'habitacle du véhicule ce qui a pour d'effet d'actionner un mécanisme d'éjection du capot dans une configuration légèrement entre-ouverte.

Puis, afin de libérer complètement l'ouverture du capot, l'utilisateur procède à une deuxième manœuvre qui lui impose de sortir du véhicule automobile pour actionner un levier d'actionnement situé sous le capot dont la disposition varie selon le type du véhicule automobile et que l'utilisateur doit souvent rechercher "en aveugle" par balayage avec sa main.

Ces dernières années, la lutte contre la pollution atmosphérique a conduit les constructeurs automobiles à développer des véhicules électriques en série comportant un moteur électrique comme unique moyen d'entraînement et dans lesquels une batterie est montée dans le plancher du corps de ces véhicules, libérant ainsi l'espace traditionnellement occupé par le bloc moteur.

L'espace ainsi libéré à l'avant du véhicule électrique est mis à profit pour former un coffre, par exemple pour des bagages. Comme ce coffre est utilisé à l'avant du véhicule automobile, il est couramment désigné par l'expression anglo-saxonne « front trunk » (en français coffre avant) ou par sa contraction « frunk ».

On comprend dès lors que cette nouvelle utilisation de l'espace avant du véhicule automobile a profondément modifié l'usage et la fréquence d'ouverture du capot avant. Par conséquent, la manœuvre d'ouverture traditionnelle du capot obligeant l'utilisateur à sortir du véhicule automobile apparaît peu ergonomique et est perçue comme gênante voire inconfortable et renvoie également une perception de piètre qualité du véhicule automobile.

Un but de la présente invention est de proposer un agencement de serrure qui permette d'augmenter le confort d'utilisation d'un coffre pourvu d'un capot avant de véhicule automobile et d'en adapter le fonctionnement pour un usage fréquent et régulier, tout en respectant les contraintes de sécurité inhérentes au domaine automobile.

On connaît déjà de l'état de la technique une serrure pour un capot de moteur de véhicule automobile comprenant un loquet en forme de fourche qui retient une gâche du capot moteur et un cliquet de verrouillage qui bloque le loquet en position fermée. Le cliquet est actionné par exemple à l'aide d'une manette d'actionnement pour adopter séquentiellement avec la gâche une configuration de fermeture d'engagement de la gâche par la fourche et une configuration de déverrouillage de libération de la gâche permettant le levage du capot.

Généralement, la serrure comprend encore un éjecteur qui est configuré pour interagir avec le loquet de sorte que le loquet est entraîné en pivotement par l'éjecteur jusqu'à une position de libération de la gâche par le loquet. L'éjecteur est également rappelé élastiquement dans le sens d'éjection par un ressort d'éjection qui permet d'éjecter la gâche et permet le levage du capot.

**On connaît de l'art antérieur, notamment des demandes de brevet** FR2991365A1**,** US2016/16883A1**, des agencements de serrure pour capot de véhicule automobile comprenant un verrou ou organe de verrou qui coopère avec un loquet ou pêne de réception d'une gâche de capot.**

L'inconvénient de la solution actuelle proposée dans l'état de la technique est que l'éjection de la gâche et donc le levage du capot se produit brutalement. Cette ouverture brutale du capot nuit à la perception globale de la qualité perçue du véhicule automobile par l'usager.

### Description de l'invention

La présente invention vise à remédier à ces inconvénients.

A cet effet, l'invention a pour objet un agencement de serrure pour un capot de véhicule automobile, comprenant un loquet monté pivotant et comprenant une encoche apte à coopérer avec le capot par engagement d'une gâche du capot dans l'encoche, un organe de verrou comprenant un cliquet de verrouillage agencé pour coopérer avec le loquet entre au moins une configuration initiale de verrouillage du loquet en engagement total de la gâche et une configuration finale de déverrouillage du loquet en libération totale de la gâche, consécutivement à au moins une action de commande de déplacement du cliquet par un actionneur, un éjecteur agencé pour entraîner, avec son éjection, le pivotement du loquet et le levage du capot, le loquet et l'éjecteur formant un organe d'éjection de la gâche, caractérisé en ce que lors du déplacement du cliquet de la configuration initiale à la configuration finale, l'organe de verrou est agencé pour faire pivoter l'organe d'éjection dans un sens d'éjection à l'encontre du couple résultant du poids du capot exercé sur l'éjecteur par l'intermédiaire de la gâche afin de permettre le levage du capot.

Grâce à l'invention, l'éjection du capot par l'éjecteur se produit de façon progressive et non pas brutalement avec la libération d'un ressort d'éjection. Autrement dit, l'organe de verrou vient pousser l'organe d'éjection dans le sens d'éjection à l'encontre dudit couple.

L'agencement de serrure selon l'invention peut comprend l'une ou plusieurs des caractéristiques suivantes.

Dans un autre mode de réalisation préféré de l'invention, l'agencement comprend un module d'assistance prévu pour assister à l'effort de levage du capot à l'encontre du couple résultant du poids du capot.

Dans un autre mode de réalisation préféré de l'invention, le module d'assistance comprend un ressort d'assistance, couplé à l'éjecteur tendant à faire pivoter l'éjecteur dans le sens d'éjection, qui est sous-dimensionné de sorte que ledit ressort d'assistance développe un couple de rappel élastique toujours inférieur au couple résultant du poids du capot.

Dans un autre mode de réalisation préféré de l'invention, l'éjecteur est monté libre en rotation.

Dans un autre mode de réalisation préféré de l'invention, l'organe de verrou comprend au moins un bras d'entraînement de l'organe d'éjection pour entraîner en pivotement l'organe d'éjection dans un sens d'éjection.

Dans un mode de réalisation préféré de l'invention, l'organe de verrou est configuré pour entraîner l'organe d'éjection dans le sens d'éjection jusqu'à atteindre la configuration finale et est configuré pour laisser l'organe d'éjection pivoter, depuis la configuration finale, dans le sens opposé sous l'effet du couple résultant du poids du capot en cas d'absence d'intervention extérieure sur le capot du véhicule.

Dans un mode de réalisation préféré de l'invention, le cliquet étant agencé pour coopérer avec le loquet dans une configuration de verrouillage intermédiaire du loquet en engagement partiel de la gâche, l'organe de verrou est configuré pour laisser l'organe d'éjection pivoter dans le sens opposé, depuis la configuration finale, jusqu'à atteindre la configuration intermédiaire sous l'effet du couple résultant du poids du capot en cas d'absence d'intervention extérieure sur le capot du véhicule.

Dans un autre mode de réalisation préféré de l'invention, le cliquet étant agencé pour coopérer avec le loquet dans une configuration de verrouillage intermédiaire du loquet en engagement partiel de la gâche et étant sélectivement déplaçable de la configuration initiale à la configuration intermédiaire consécutivement à une première action de commande et de la configuration intermédiaire à la configuration finale consécutivement à une deuxième action de commande, l'organe de verrou comprend un premier bras d'entraînement de l'organe d'éjection lors de la première action et un deuxième bras d'entraînement de l'organe d'éjection lors de la deuxième action.

Dans un autre mode de réalisation préféré de l'invention, le loquet comprend un profil étagé délimitant des premier et deuxième crans coopérant avec le cliquet respectivement dans les configurations initiale et intermédiaire.

Dans un autre mode de réalisation préféré de l'invention, le loquet comprend sur sa périphérie une portion de surface d'appui qui s'étend en prolongement du deuxième cran et le cliquet présente sur sa périphérie une portion de surface d'appui complémentaire qui vient coopérer par contact avec la portion de surface d'appui du loquet dans la configuration finale.

Dans un autre mode de réalisation préféré de l'invention, le cliquet est sélectivement pivotant à l'encontre d'une sollicitation élastique entre une première position d'engagement dans le premier cran, une deuxième position d'engagement dans le deuxième cran, une troisième position de coopération par contact avec le loquet.

Dans un autre mode de réalisation préféré de l'invention, l'agencement comprend un bloqueur de sécurité mobile relativement au cliquet et agencé pour s'opposer au pivotement du cliquet et du loquet au-delà de la configuration intermédiaire consécutivement à la première action.

Dans un autre mode de réalisation préféré de l'invention, le bloqueur comprend des parties proximale et distale qui interagissent respectivement avec le loquet et le cliquet pour s'opposer à leur pivotement au-delà de la configuration intermédiaire dans une position d'embrayage et pour les laisser libres de parcours dans une position de débrayage.

Dans un autre mode de réalisation préféré de l'invention, la partie distale a la forme d'une jambe agencée pour présenter une paroi frontale d'interception d'un élément de prise fonctionnelle du cliquet dans la position d'embrayage et pour présenter une paroi dorsale opposée qui se prolonge par un profil en creux à l'intérieur duquel l'élément de prise peut se déplacer librement dans la position de débrayage du bloqueur.

Dans un autre mode de réalisation préféré de l'invention, lors de la première action, le bloqueur est agencé pour être entraîné, à l'encontre de sa sollicitation élastique, dans une position extrême d'embrayage dans laquelle le bloqueur est sollicité en pivotement par le cliquet par l'intermédiaire de sa partie distale ce qui tend à engager davantage la partie proximale en butée contre le loquet, de telle sorte que le bloqueur produit un verrouillage autobloquant du cliquet et du loquet les empêchant de pivoter au-delà de la configuration intermédiaire.

Dans un autre mode de réalisation préféré de l'invention, la partie proximale a une forme générale de fourche pourvue d'un bras antérieur et d'un bras postérieur et le loquet porte un relief apte à s'engager à l'intérieur de la fourche pour coopérer sélectivement avec le bras postérieur pour retenir le bloqueur dans la configuration initiale et pour buter contre le bras antérieur dans la configuration intermédiaire.

Dans un autre mode de réalisation préféré de l'invention, le bloqueur de sécurité est agencé pour entraîner dans son déplacement l'organe d'éjection dans le sens d'éjection lors de la première action et le cliquet est agencé pour entraîner dans son pivotement l'organe d'éjection dans le sens d'éjection lors de la deuxième action.

Dans un autre mode de réalisation préféré de l'invention, le bloqueur comprend le premier bras d'entraînement coopérant avec l'éjecteur au cours de la première action et le cliquet comprend le deuxième bras d'entraînement coopérant avec le loquet lors de la deuxième action.

Dans un autre mode de réalisation préféré de l'invention, l'agencement comprend un cliquet de rétention de l'organe d'éjection dans la configuration finale et/ou dans la configuration intermédiaire.

Dans un autre mode de réalisation de l'invention, le cliquet comprend au moins un cran de retenue d'un relief de l'organe d'éjection dans la configuration intermédiaire.

Dans un autre mode de réalisation préféré de l'invention, l'agencement comprend un actionneur pourvu d'un élément d'actionneur commandé en déplacement par l'actionneur et relié au cliquet pour entraîner dans son déplacement le cliquet en pivotement, le bloqueur de sécurité est agencé pour limiter une course de déplacement de l'élément lors de la première action de commande, de manière à limiter une amplitude de pivotement du cliquet.

Dans un autre mode de réalisation préféré de l'invention, l'actionneur comprend un câble de traction pourvu d'une extrémité formant l'élément d'actionneur reliée au cliquet, l'action de commande étant une action de traction de l'élément d'actionneur, par exemple l'élément d'actionneur étant formé par une goupille de guidage à l'intérieur d'une rainure du cliquet.

Dans un autre mode de réalisation préféré de l'invention, le loquet est agencé dans la configuration initiale pour retenir le bloqueur dans sa position d'embrayage à l'encontre de sa sollicitation élastique et le bloqueur est agencé pour intercepter le loquet en pivotement lors de la première action pour retenir le loquet et le cliquet dans la configuration intermédiaire.

Dans un autre mode de réalisation préféré de l'invention, le cliquet et le bloqueur sont montés pivotants indépendamment l'un de l'autre et sont sollicités élastiquement par des moyens élastiques dans un même sens de pivotement.

Dans un autre mode de réalisation préféré de l'invention, le loquet et l'éjecteur sont raccordés entre eux afin de pivoter d'une manière verrouillée l'un par rapport à l'autre ou bien le loquet et l'éjecteur sont formés d'une seule pièce.

L'invention a également pour objet un véhicule automobile comprenant un capot et un agencement de serrure apte à coopérer avec une gâche montée sur le capot, caractérisé en ce que l'agencement est conforme à l'invention et est monté sur un châssis du véhicule automobile.

De préférence, l'actionneur est motorisé électriquement.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] La figure 1 est une vue en perspective d'un agencement de serrure selon l'invention ;
[Fig. 2] La figure 2 représente l'agencement de serrure de la figure 1, dans laquelle un élément de carénage a été enlevé ;
[Fig. 3] La figure 3 est une vue en perspective de l'agencement de serrure de la figure 2 et d'un actionneur de l'agencement de serrure ;
[Fig. 4] La figure 4 est une vue en perspective de l'agencement de serrure de la figure 1 ;
[Fig. 5] La figure 5 est une vue en perspective d'un organe d'éjection de l'agencement de serrure de la figure 1 ;
[Fig. 6] La figure 6 est une vue de face d'un loquet et d'un cliquet de verrouillage du loquet de l'agencement de serrure de la figure 1 ;
[Fig. 7] La figure 7 est une vue de face de l'agencement de serrure dans une configuration initiale de verrouillage ;
[Fig. 8] La figure 8 est une vue de face de l'agencement de serrure dans une configuration intermédiaire de verrouillage ;
[Fig. 9] La figure 9 est une vue de face de l'agencement de serrure dans une configuration finale de déverrouillage ;
[Fig. 10] La figure 10 illustre quatre étapes A à D de déverrouillage de l'agencement de serrure de la figure 1 ;
[Fig. 11] La figure 11 illustre quatre étapes A à D de verrouillage de l'agencement de serrure de la figure 1 ;
[Fig. 12] La figure 12 illustre trois étapes A à C de déverrouillage d'une variante de l'agencement de serrure de la figure 1;;

### Description détaillée de l'invention

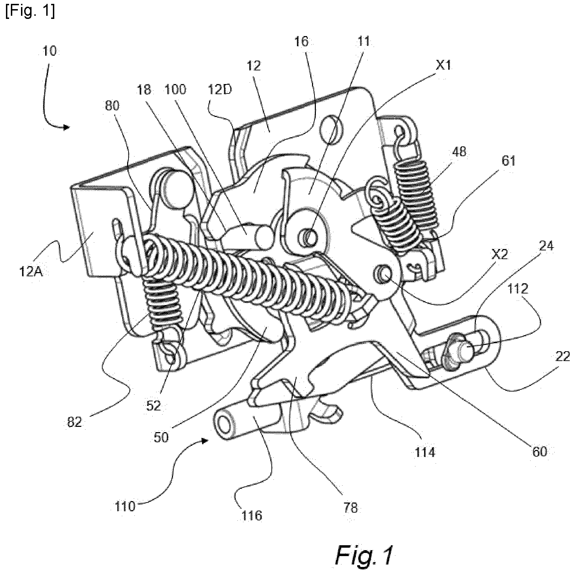

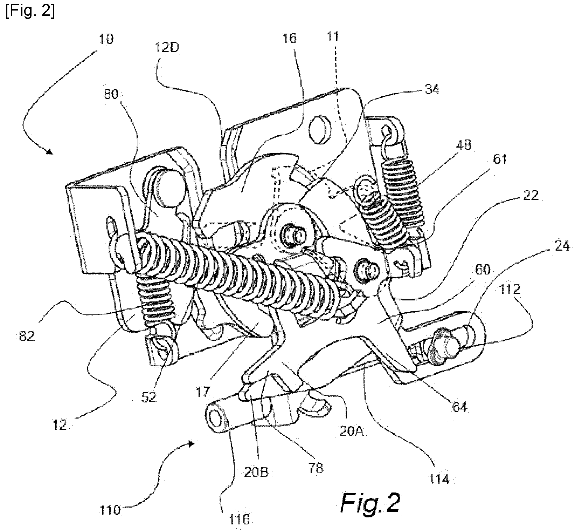

On a représenté un agencement de serrure pour un capot de véhicule automobile selon l'invention sur les figures 1 à 11. L'agencement de serrure sera désigné par la référence générale 10.

Comme cela est illustré sur la figure 1, l'agencement 10 est configuré pour coopérer avec une gâche 100 (représentée en trait discontinu) fixée à l'intérieur du capot du véhicule automobile (non représenté sur les figures). A cet effet, l'agencement 10 comprend un mécanisme d'encliquetage apte à coopérer avec la gâche 100 du capot.

De préférence, comme cela est illustré sur les figures, l'agencement de serrure 10 comprend encore une platine 12 servant de support au mécanisme d'encliquetage et destinée à être fixée au véhicule. Cette platine 12 est par exemple réalisée à partir d'une tôle métallique, par découpe et/ou pliage de ladite tôle. Comme cela est illustré sur la figure 1, la platine 12 comporte par ailleurs par exemple une pluralité de pattes de fixation 12A pour des moyens élastiques tels que des ressorts du mécanisme d'encliquetage 14, pliées à angle droit et une pluralité de trous de fixation 12B à la carrosserie.

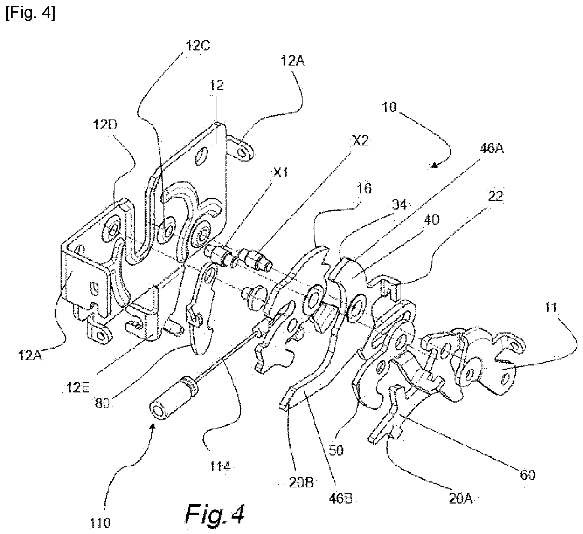

Conformément à l'invention et comme cela est illustré en détail notamment sur la figure 4, l'agencement de serrure 10 comprend un loquet rotatif 16 comprenant une encoche 18 apte à coopérer avec la gâche 100 du capot.

La gâche 100 se présente par exemple sous la forme d'un crochet refermé à la manière d'un anneau. Le crochet 100 présente par exemple une forme rectangulaire ou carrée et l'encoche 18 du loquet 16 a une forme générale de crochet pour venir retenir la gâche 100.

Dans l'exemple illustré sur les figures, le loquet 16 est monté pivotant autour d'un axe X1 sur la platine 12. Cet axe X1 en forme de tourillon peut être fixé par vissage, soudage et/ou pressage sur un orifice 12C pratiqué dans la platine 12.

Par ailleurs, de préférence, la platine 12 peut encore présenter une échancrure 12D en forme de gueule de poisson ouverte vers l'extérieur ou en forme de U, destinée à recevoir la gâche 100 en vue du guidage vers l'encoche 18 du loquet 16.

Dans la suite de la description, les termes à signification directionnelle tels que « antérieur » et « postérieur » sont utilisés pour désigner les parties situées respectivement « en tête » et « en queue » par rapport au sens de rotation direct ou horaire référencé S1. De plus, les termes « distal » et « proximal » traduisent le fait qu'un élément est éloigné ou proche du loquet 16.

L'agencement de serrure 10 comprend encore un organe de verrou 20 comprenant un cliquet de verrouillage 22. Ce cliquet de verrouillage 22 est agencé pour coopérer avec le loquet 16 entre au moins une configuration initiale de verrouillage du loquet 16 en engagement total de la gâche 100 et une configuration finale de déverrouillage du loquet 16 en libération totale de la gâche 100.

Le passage de la configuration initiale à la configuration finale est réalisé consécutivement à au moins une action de commande du déplacement du cliquet 22, effectué par exemple par un moyen d'actionnement ou actionneur 110. Par exemple, l'actionneur 110 comprend un élément d'actionnement 112 couplé en entraînement au cliquet 22 pour faire pivoter le cliquet 22 de la configuration initiale à la configuration finale.

Par exemple, l'actionneur 110 comprend un câble de traction 114, de préférence mobile dans une gaine 116 et l'élément d'actionneur 112 est formé par un embout d'extrémité du câble de traction 114, couplé au cliquet 22. Dans ce cas, l'action de déplacement est une action de traction du cliquet 22. Par exemple, l'élément d'actionneur 112 se présente sous la forme d'une goupille de guidage coopérant à l'intérieur d'une rainure 24 de guidage ménagée sur le cliquet 22. Ainsi, lorsque la goupille de guidage 112 vient en butée de fin de course à l'intérieur de la rainure de guidage 24 du cliquet 22, elle provoque l'entraînement en mouvement du cliquet 22 dans le sens horaire S1 à l'encontre de la sollicitation élastique exercée par l'action du ressort 48 de rappel du cliquet 22.

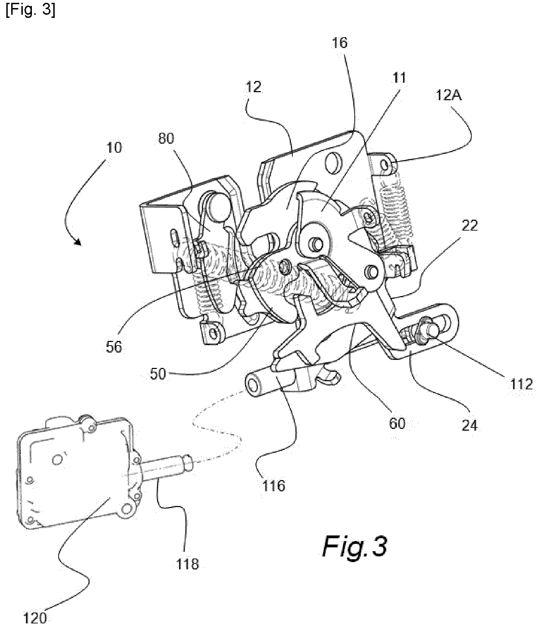

Comme cela est illustré sur la figure 3, l'actionneur 110 comprend également un boîtier 120 dans lequel est agencé un moteur électrique qui entraîne un arbre via un agencement d'engrenage (non visibles sur la figure). Par exemple, l'arbre agit de son côté sur une tige de poussée 118 déplaçable longitudinalement par rapport au boîtier 120, laquelle vient par exemple coopérer avec le câble de traction 114.

Dans l'exemple illustré, l'élément d'actionneur 110 est agencé pour faire pivoter de façon sélective le cliquet 22 de la configuration initiale à la configuration intermédiaire consécutivement à une première traction du câble et de la configuration intermédiaire à la configuration finale consécutivement à une deuxième action de traction du câble 114. Autrement dit, l'actionneur 110 permet de commander séquentiellement le déplacement du cliquet 22 d'une configuration à l'autre par les première et deuxième actions de traction du câble 114.

De préférence, le cliquet de verrouillage 22 et le loquet 16 coopèrent ensemble de la configuration initiale à la configuration finale en passant par une configuration de verrouillage intermédiaire du loquet 16 en engagement partiel de la gâche 100. Ceci permet ainsi de déverrouiller l'agencement de serrure 10 de manière sélective d'une configuration de verrouillage initiale à une configuration de verrouillage intermédiaire d'une part puis de la configuration intermédiaire jusqu'à la configuration finale de déverrouillage d'autre part.

De préférence, l'élément d'actionneur 112 est agencé pour faire pivoter de façon sélective le cliquet 22 de la configuration initiale à la configuration intermédiaire consécutivement à une première traction du câble 114 et de la configuration intermédiaire à la configuration finale consécutivement à une deuxième action de traction du câble 114. Autrement dit, l'actionneur 110 permet de commander séquentiellement le déplacement du cliquet 22 d'une configuration à l'autre par les première et deuxième actions de traction du câble 114.

En outre, comme cela est illustré la figure 3, la platine 12 comprend encore une patte de support 12E pourvu d'un arrête-gaine agencé pour bloquer la gaine 116 entourant le câble de commande 114.

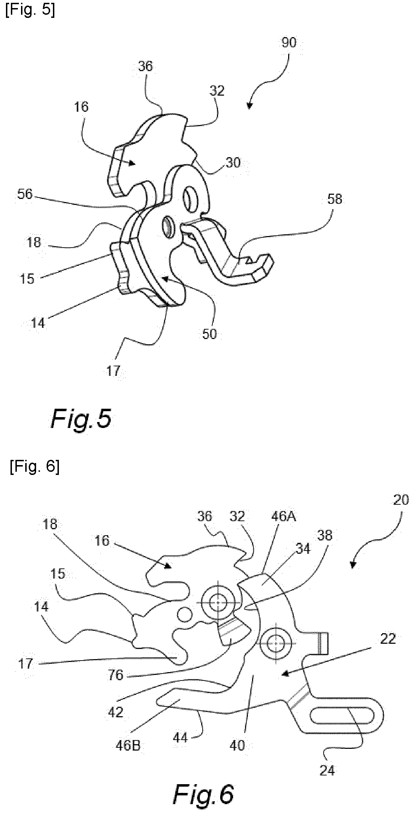

Comme cela est illustré sur la figure 6, le loquet 16 comprend un profil étagé délimitant des premier 30 et deuxième 32 crans coopérant avec le cliquet 22 respectivement dans les configurations initiale et intermédiaire. De préférence, les crans 30 et 32 délimitent des encoches de verrouillage et le cliquet 22 comprend de préférence une projection saillante 34 en forme de bec de verrouillage qui est apte à s'engager de manière complémentaire sélectivement dans chaque encoche de verrouillage des crans 30 et 32 dans les configurations initiale et intermédiaire de verrouillage.

En outre, de préférence, le loquet 16 comprend sur sa périphérie une portion de surface d'appui 36 qui s'étend en prolongement du deuxième cran 32, par exemple sensiblement en forme d'arc de cercle centré sur le premier axe X1. Par ailleurs, de préférence, le cliquet 22 présente sur sa périphérie une portion de surface d'appui complémentaire 38, de même centre et de rayon de courbure sensiblement identique agencée pour coopérer par contact avec la portion de surface d'appui 36 du loquet 16, lors du passage de la configuration intermédiaire à la configuration finale.

Ainsi, le cliquet 22 est sélectivement pivotant à l'encontre d'une sollicitation élastique entre une première position d'engagement dans le premier cran 30 du loquet 16, une deuxième position d'engagement dans le deuxième cran 32 du loquet 16 et de préférence dans une troisième position de coopération par contact avec le loquet 16. Dans l'exemple décrit, les trois positions du cliquet 22 sont distinctes angulairement les unes des autres.

Dans l'exemple décrit, le cliquet 22 a une forme générale de branche principale arquée 40, par exemple en forme de croissant de lune, qui délimite un bord périphérique radialement interne 42 et un bord périphérique radialement externe 44 par rapport à la courbure générale de la branche 40.

Dans l'exemple décrit, l'une des extrémités 46A, 46B de la branche 40, ici l'extrémité postérieure 46A de la branche 40, forme la projection saillante ou bec de verrouillage 34 et la portion de surface d'appui complémentaire 38 est formée dans le bord périphérique radialement interne 42 de la branche 40. La branche 40 délimite un espace interne du côté interne incurvé à l'intérieur duquel le loquet 16 peut pivoter relativement au cliquet 22 depuis la configuration intermédiaire vers la configuration finale par coopération par contact de leurs surfaces d'appui complémentaires 36 et 38.

Le cliquet 22 est par exemple monté pivotant autour d'un deuxième axe X2. Dans cet exemple, le cliquet 22 est sollicité par un moyen élastique 48 en pivotement dans le sens anti-horaire S2 sur la figure 1. Dans l'exemple illustré, le moyen élastique 48 comprend un ressort de traction pourvu d'une première extrémité 48A accrochée à la platine 12 et une deuxième extrémité 48B est accrochée au cliquet 22.

Conformément à l'invention, l'agencement 10 comprend encore un éjecteur 50 qui interagit avec le loquet 16 de telle sorte que le loquet 16 est entraîné en pivotement par l'éjecteur 50. L'éjecteur 50 et le loquet 16 forment un organe d'éjection référencé 90 et illustré en détail sur la figure 5.

A cet effet, selon l'invention, l'éjecteur 50 comprend une came 56 de levage de la gâche 100, et est agencé pour entraîner, avec son éjection, le pivotement du loquet 16 et le levage du capot (figure 3). De préférence, le loquet 16 et l'éjecteur 50 sont formés d'une seule pièce, par exemple par un assemblage soudé.

En variante, le loquet 16 et l'éjecteur 50 sont formés par deux pièces distinctes qui sont raccordées entre elles afin de tourner d'une manière verrouillée avec un jeu prédéterminé entre eux. Par exemple, dans ce cas, le loquet 16 et l'éjecteur 50 peuvent être montés pivotants l'un par rapport à l'autre autour du premier axe de rotation X1 et la gâche 100 est emprisonnée entre une surface de contact de l'éjecteur 50 avec la gâche 100 et une surface de contact correspondante du loquet 16 avec la gâche 100. La gâche 100 est alors enserrée entre les deux surfaces du contact du loquet 16 et de l'éjecteur 50 de sorte que le pivotement de l'éjecteur 50 dans le sens d'éjection provoque le déplacement de la gâche 100 qui entraîne le déplacement du loquet 16.

En particulier, lors du déplacement du cliquet 22 de la configuration initiale à la configuration finale, l'organe de verrou 20 est agencé pour faire pivoter l'organe d'éjection 90 dans un sens d'éjection à l'encontre du couple résultant du poids du capot exercé sur l'éjecteur 50 par l'intermédiaire de la gâche 100 afin de permettre le levage du capot et le pivotement du loquet 16.

De préférence, l'organe de verrou 20 comprend un élément d'entraînement, ayant par exemple la forme d'un bras d'entraînement qui est configuré pour exercer une contrainte progressive sur l'organe d'éjection 90 l'amenant à pivoter dans le sens d'éjection, à l'encontre du couple résultant du poids du capot. De préférence, l'actionneur 110 est motorisé électriquement ce qui permet ainsi d'obtenir une cinématique progressive de l'entraînement de l'éjecteur 50 par le cliquet 22 et donc une cinématique de levage du capot progressive.

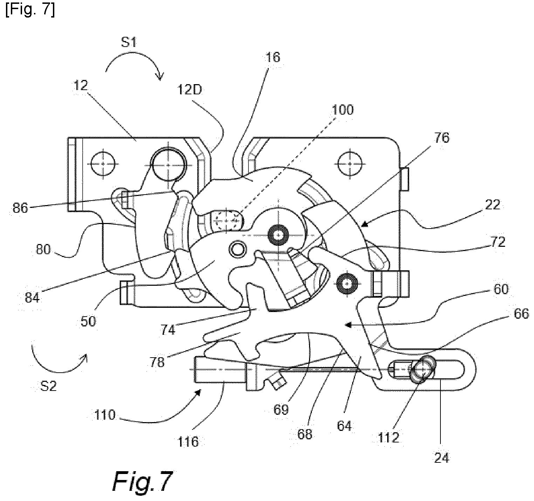

Dans l'exemple illustré, l'agencement de serrure 10 comprend encore un cliquet 80 de rétention de l'organe d'éjection 90 dans la configuration intermédiaire et dans la configuration finale. Comme cela est illustré sur la figure 7, le cliquet 80 comprend un bord périphérique comprenant un premier cran de retenue 84 de l'organe d'éjection 90 dans la configuration intermédiaire et un deuxième cran de retenue 86 de l'organe d'éjection 90 dans la configuration finale. Ceci permet d'éviter que l'organe d'éjection 90 puisse pivoter par l'effet de la gravité dans le sens opposé d'éjection. Autrement dit, ceci permet de s'opposer au retour de l'organe d'éjection 90 dans le sens inverse du sens d'éjection lors d'un relâchement de la contrainte de traction du câble 114.

De préférence, l'organe de verrou 20 comprend un premier bras d'entraînement 20A et un deuxième bras d'entraînement 20B de l'organe d'éjection 90. Ainsi, le premier bras d'entraînement 20A est configuré pour amener l'organe d'éjection 90 sensiblement en regard du premier cran de rétention 84 dans la configuration intermédiaire. Ensuite, le deuxième bras d'entraînement 20B est configuré pour amener l'organe d'éjection 90 sensiblement en regard du deuxième cran de rétention 86 du levier de rétention 80.

De préférence, l'agencement 10 comprend un module d'assistance prévu pour assister à l'effort de levage du capot à l'encontre du couple résultant du poids du capot. Par exemple, le module d'assistance comprend un ressort d'assistance 52, couplé à l'éjecteur 50 tendant à faire pivoter l'éjecteur 50 dans le sens d'éjection, qui est sous-dimensionné de sorte que ledit ressort d'assistance 52 développe un couple de rappel élastique toujours inférieur au couple résultant du poids du capot. Par conséquent, la libération de l'organe d'éjection 90 par le cliquet de verrouillage 22 ne peut pas entraîner l'éjection de l'organe d'éjection 90 par le ressort d'assistance 52. En effet, du fait que le ressort d'assistance 52 est sous-dimensionné, le couple de rappel élastique exercé par le ressort d'assistance 52 ne permet pas de s'opposer au couple résultant du poids du capot.

Le ressort d'assistance 52 est dans cet exemple un ressort de traction pourvu d'une première extrémité 52A accrochée à la platine 12 et d'une deuxième extrémité 52B accrochée à l'éjecteur 50. Par exemple, l'éjecteur 50 comprend une patte de support 58 de l'extrémité 52B du ressort d'assistance 52.

Dans une variante non illustrée, l'éjecteur 50 peut être monté libre en rotation sans module d'assistance. Dans ce cas, l'actionneur 110 motorisé est calibré en puissance électrique de telle sorte que l'effort de déplacement exercé sur l'organe d'éjection 90 par l'organe de verrou 20, par l'intermédiaire des bras d'entraînement 20A, 20B, permette de compenser le couple résultant du poids du capot.

De façon optionnelle, l'agencement de verrou 10 comprend encore un bloqueur de sécurité 60 sollicité élastiquement en pivotement et monté par exemple pivotant sur la platine d'assemblage 12. De préférence, le cliquet 22 et le bloqueur 60 sont montés pivotants sur un axe de pivotement commun, ici le deuxième axe X2 et sont sollicités élastiquement dans un même sens anti-horaire S2.

De préférence, le bloqueur 60 est sollicité élastiquement en pivotement à partir d'une position d'embrayage dans laquelle le bloqueur 60 est agencé pour s'opposer au pivotement du cliquet 22 et du loquet 16 au-delà de la configuration intermédiaire consécutivement à la première action de commande vers une position de débrayage dans laquelle le bloqueur 60 autorise le cliquet 22 et le loquet 16 d'atteindre la configuration finale consécutivement à la deuxième action de commande.

De préférence, comme cela être décrit en détail ci-après, le bloqueur 60 est agencé dans la position d'embrayage pour limiter à une course réduite le pivotement angulaire du cliquet de verrouillage 22 lors de la première action et dans la position de débrayage pour étendre à une course complète le pivotement angulaire du cliquet 22 lors de la deuxième action permettant d'atteindre la configuration finale de déverrouillage. Ainsi, en fonction de la position d'embrayage ou de débrayage du bloqueur 60, la course de pivotement angulaire du cliquet de verrouillage 22 est respectivement réduite ou étendue.

Ceci permet d'éviter un mouvement d'amplitude angulaire trop ample du cliquet 22 lors de la première action qui pourrait provoquer le passage directement de la configuration initiale à la configuration finale.

Dans l'exemple décrit, le bloqueur de sécurité 60 est sollicité par un moyen élastique 61 vers la position de débrayage. Dans l'exemple illustré sur la figure 1, le moyen élastique 61 comprend un ressort de traction avec une première extrémité 61A accrochée de façon solidaire à la platine 12 et une deuxième extrémité 61B accrochée au bloqueur 60. Dans cet exemple, l'agencement de serrure 10 comprend une pièce de carénage 11 qui est montée solidaire de la platine 12 par l'intermédiaire de l'axe X1 et pourvue d'une patte d'accrochage de l'extrémité 61A du ressort 61.

De préférence, comme cela est illustré sur la figure 7, le loquet 16 est agencé pour retenir le bloqueur 60 dans la configuration initiale à l'encontre de la sollicitation élastique exercée par le moyen élastique 61 du bloqueur 60. En outre, le bloqueur 60 est agencé pour intercepter le loquet 16 en pivotement lors de la première action de traction afin de s'opposer au pivotement du loquet 16 dans un sens de libération de la gâche 100.

Dans l'exemple illustré, le bloqueur 60 comprend une partie distale 62 et une partie proximale 70 qui interagissent respectivement avec le cliquet 22 et le loquet 16 pour s'opposer à leur pivotement au-delà de la configuration intermédiaire dans la position d'embrayage et pour les laisser libres de parcours dans la position de débrayage.

Par exemple, la partie distale 62 a la forme d'une jambe 64 agencée pour présenter une paroi frontale 66 d'interception d'un élément de prise du cliquet 16 par le bloqueur 60. Dans l'exemple illustré, l'élément de prise est formé par l'élément d'actionneur 112 en forme de goupille de guidage et qui forme un relief configuré pour venir en prise avec la jambe 64 du bloqueur 60 lors du pivotement du cliquet 16.

De préférence, la jambe 64 du bloqueur 60 est agencée pour présenter une paroi dorsale opposée 68 qui se prolonge selon un profil en creux 69 à l'intérieur duquel l'élément d'actionneur 112 peut se déplacement librement dans la position de dégagement du bloqueur 60. Dans cette position d'embrayage, la jambe 64 est écartée d'une trajectoire de déplacement de l'élément d'actionneur 112 lors de la deuxième action de déplacement.

Dans l'exemple décrit, le bloqueur 60 est agencé pour limiter une course de déplacement de l'élément 112 lors de la première action de commande de manière à limiter une amplitude de pivotement du cliquet 22.

En outre, dans l'exemple décrit, la partie proximale 70 agencée pour intercepter le loquet 16 lors de la première action de traction dans sa position d'embrayage et pour laisser libre de parcours le loquet 16 lors de la deuxième action de traction dans sa position de débrayage.

De préférence, la partie proximale 70 a une forme générale de fourche pourvue d'un bras postérieur 72 et d'un bras antérieur 74 et le loquet 16 porte un relief 76 apte à s'engager à l'intérieur de la fourche.

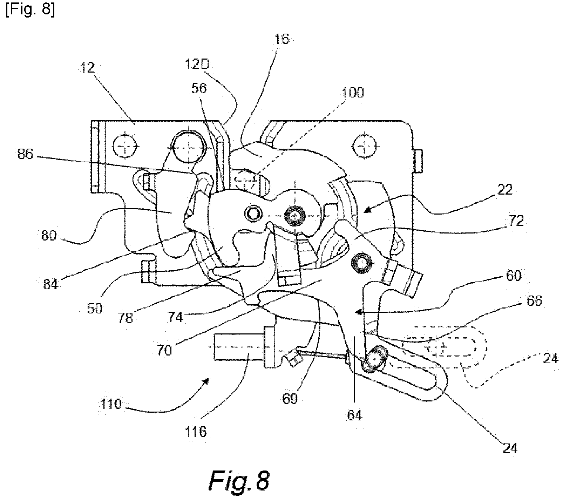

Le relief 76 du loquet 16 coopère avec la fourche du bloqueur 60 d'une part pour retenir le bloqueur 60 dans sa position d'embrayage par le bras postérieur 72 dans la configuration initiale (illustrée en figure 7) et d'autre part pour buter contre le bras antérieur 74 dans la configuration intermédiaire (illustrée en figure 8) consécutivement au pivotement du bloqueur 60 à l'encontre de sa sollicitation élastique.

De préférence, lors de la première action, le bloqueur 60 est agencé pour être entraîné, à l'encontre de sa sollicitation élastique, dans une position extrême d'embrayage dans laquelle le bloqueur 60 est sollicité en pivotement par le cliquet 22 par l'intermédiaire de la partie distale 62 ce qui tend à engager davantage la partie proximale 70 en butée contre le loquet 16. Le bloqueur 60 produit alors un verrouillage autobloquant du cliquet 16 et du loquet 22 les empêchant de pivoter au-delà de la configuration intermédiaire. Ce verrouillage autobloquant est maintenu jusqu'au relâchement de l'effort de déplacement de l'actionneur 110 exercé sur l'élément d'actionneur 112.

L'élément d'actionneur 112 vient en prise avec le bloqueur 60, ici la partie distale 62 du bloqueur 60 et entraîne en pivotement ensemble le cliquet 16 et le bloqueur 60 au cours de la première traction de câble.

Au cours de la première traction de câble, l'élément d'actionneur 112 vient en prise avec le bloqueur 60, ici la partie distale 62 du bloqueur 60 et entraîne en pivotement solidaire le cliquet 22 et le bloqueur 60.

Dans l'exemple décrit, après relâchement de l'effort de traction de la première action, l'élément d'actionneur 112 est alors poussé dans un sens opposé au sens de traction à l'intérieur de la rainure de guidage 24 du cliquet 22, par exemple en étant poussé dans la rainure 24 par son propre ressort ou par le bloqueur 60 par l'intermédiaire de la jambe 64. L'élément d'actionneur 112 peut par exemple être poussé dans le sens opposé au sens de traction par le bloqueur 60 qui est rappelé élastiquement dans la position de débrayage ou éventuellement par des moyens connus en soi de rappel élastique.

Ceci a pour effet de libérer la jambe 64 du bloqueur 60 qui est alors libre de pivoter dans le sens anti-horaire S2 par rappel élastique jusqu'à atteindre sa position de débrayage.

Dans la position de débrayage, le bloqueur 60 est positionné de telle sorte qu'il présente son profil en creux 69 à l'intérieur duquel l'élément d'actionneur 112 peut se déplacer jusqu'à faire pivoter le cliquet 22 dans la configuration finale lors de la deuxième action de traction. Au cours de la deuxième traction de câble, l'élément d'actionneur 112 se déplace à l'intérieur du profil en creux 69 du bloqueur 60, et entraîne en pivotement le cliquet 22 jusqu'à la configuration finale.

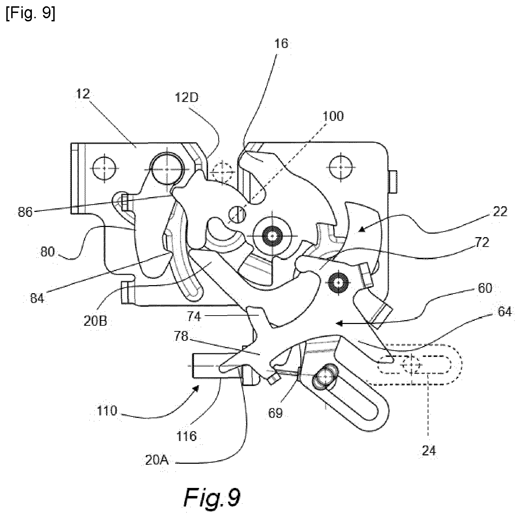

Comme cela est visible sur la figure 9, le premier bras d'entraînement 20A est formé par une branche de prolongement terminale avant 78 du bloqueur 60 qui délimite une surface de guidage configurée pour venir coopérer avec l'organe d'éjection 90 de la configuration initiale à la configuration intermédiaire (figure 8).

Comme cela apparaît clairement sur la figure 9, le deuxième bras d'entraînement 20B est formé par l'extrémité antérieure 46B de la branche 40 du cliquet 22 qui forme une surface de guidage et d'appui de l'organe d'éjection 90.

A cet effet, de préférence, le loquet 16 comprend encore une projection saillante en forme de nez 17 qui est agencée pour venir coopérer avec le ou les bras d'entraînement 20A et 20B.

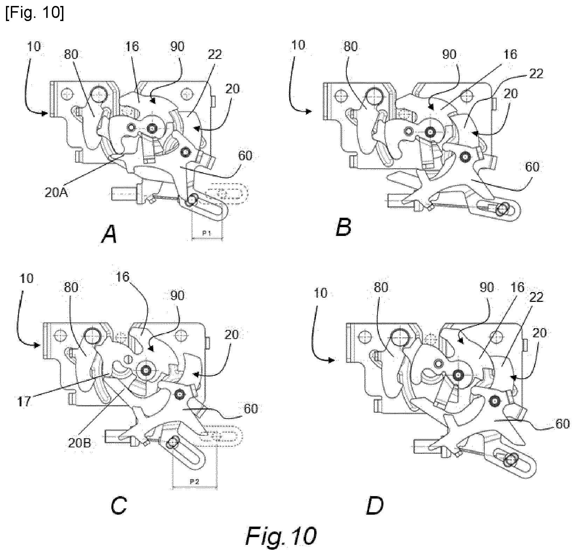

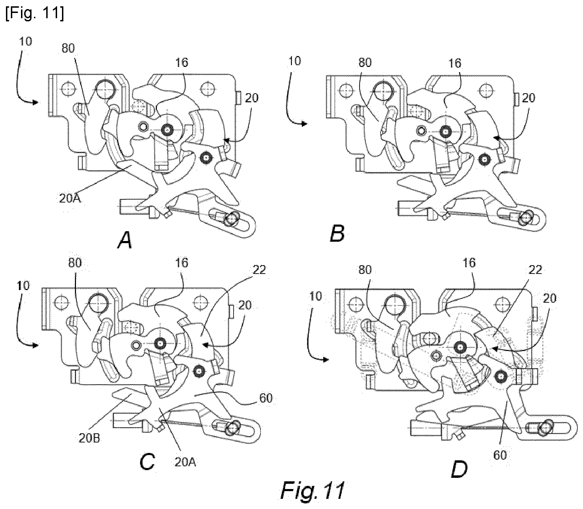

On va maintenant décrire les principaux aspects de fonctionnement de l'invention en référence aux figures 10 et 11.

On a représenté sur la figure 10, des étapes A à D de levage et de déverrouillage du capot du véhicule automobile par l'agencement de serrure 10 selon l'invention. Initialement, l'agencement de serrure 10 est dans la configuration initiale de verrouillage illustrée sur la figure 7.

Dans cette configuration initiale, le loquet 16 est en engagement total avec la gâche 100 du capot du véhicule automobile et coopère avec le cliquet 22 par son premier cran 30. En outre, le bloqueur de sécurité 60 s'étend dans sa position initiale d'embrayage. Dans cette position initiale d'embrayage, la jambe 64 est déployée au travers d'une trajectoire de traction de l'élément d'actionneur 112. En outre, le relief 76 du loquet 16 permet de retenir le bloqueur 60 dans cette position initiale par le bras postérieur 72 du bloqueur 60 qui vient en butée contre ce relief 76 par la sollicitation élastique dans le sens anti-horaire S2.

L'utilisateur souhaite alors ouvrir le capot du véhicule automobile. Au cours d'une première étape (figure 10A), il commande l'actionneur 110 pour effectuer une première action de déplacement de l'élément 112 par traction du câble 114. L'élément 112 est alors entraîné en déplacement à l'intérieur de la rainure de guidage 24 du cliquet 22 jusqu'à ce que l'élément 112 soit intercepté par la jambe 64 du bloqueur 60.

Au cours de cette première action illustrée par la figure 10B, l'élément d'actionneur 112 vient en prise avec la jambe 64 ce qui provoque le pivotement du bloqueur 60 dans le sens horaire S1 à l'encontre de la sollicitation élastique du bloqueur 60 jusqu'à atteindre une position extrême d'embrayage. L'élément d'actionneur 112 est limité dans son déplacement à une course de traction P1 par le bloqueur de sécurité 60 (figure 10A).

Dans cette position extrême d'embrayage, le bloqueur 60 vient présenter son bras d'entraînement 78 pour entraîner le pivotement de l'éjecteur 50 et du loquet 16 dans le sens d'éjection de la gâche 100 jusqu'à venir enclencher une partie de l'ensemble formé par l'éjecteur 50 et le loquet 16 dans le premier cran 84 du levier de rétention 84.

De préférence, le pivotement de l'organe d'éjection 90 est assisté par le ressort d'assistance 52 qui vient exercer un couple de rappel élastique de l'éjecteur 50 dans le sens d'éjection.

En outre, le cliquet 22 est pivoté par l'effet de la traction de l'élément d'actionneur 112 qui vient en butée de fin de course à l'intérieur de la rainure de guidage 24 et vient provoquer le pivotement du cliquet 22 à l'encontre de la sollicitation élastique dans le sens horaire S1. Ainsi, le loquet 16 en étant désengagé du cliquet 22 peut pivoter librement dans le sens de libération horaire S1 en étant par exemple entraîné par l'éjecteur 50. Ceci a pour effet de désengager partiellement la gâche 100 du loquet 16. Lors du pivotement du loquet 16, le relief 76 du loquet 16 engagé à l'intérieur de la fourche 62 à deux bras du bloqueur 60 vient buter contre le bras antérieur 74 du bloqueur 60 qui se trouve en position extrême d'embrayage. Lors de ce même pivotement du loquet 16, le bec de verrouillage 34 du cliquet 22 vient s'engager à l'intérieur du deuxième cran 32 du loquet 16.

A l'issue de cette étape 10B, le cliquet 22 est alors désengagé du premier cran 30 et est engagé dans le deuxième cran 32 du loquet 16 et le loquet 16 est dans une position d'engagement partiel de la gâche 100. En outre, l'organe d'éjection 90 est retenu par le premier cran 84 du cliquet de rétention 80, par exemple par une première partie saillante 14 du bord périphérique du loquet 16.

Par ailleurs, comme cela est visible sur la figure 10B, la traction de l'élément d'actionneur 112 est relâchée. Le cliquet 22 ayant pivoté dans une deuxième position dans le sens horaire S1 en passant du premier cran 30 au deuxième cran 32, l'élément d'actionneur 112 est poussé à l'intérieur de la rainure de guidage 24 dans un sens opposé au sens de traction ce qui libère la jambe 64 du bloqueur 60 qui est alors rappelé élastiquement dans sa position de débrayage. Le cliquet 22 et le loquet 16 se trouvent alors dans la configuration intermédiaire de désengagement partiel de la gâche 100 (figure 8).

Au cours d'une deuxième étape (figure 10C), l'usager commande l'actionneur 110 pour effectuer une deuxième action de déplacement de l'élément 112 par traction du câble 114. L'élément 112 est alors entraîné en déplacement à l'intérieur de la rainure de guidage 24 du cliquet 22 jusqu'à venir en butée de fin de course dans la rainure de guidage 24 et provoquer le pivotement du cliquet 22 dans le sens horaire S1 (figures 10B, 10C). Le cliquet 22 est alors désengagé du deuxième cran 34.

Dans ce cas, la traction de l'élément d'actionneur 112 n'est pas limitée par la jambe 64 du bloqueur 60 qui est dans sa position de débrayage. Au contraire, l'élément d'actionneur 112 peut étendre son déplacement à une course de traction P2 à l'intérieur du profil en creux 69 du bloqueur 60 qui est en position de débrayage. Ceci provoque le pivotement du cliquet 22 qui va alors entraîner en pivotement l'organe d'éjection 90 par le bras d'entraînement 20B formé par l'extrémité antérieure 46B de la branche 40 du cliquet 22.

Ceci a pour effet de faire pivoter l'éjecteur 50 et le loquet 16 jusqu'à la libération de la gâche 100 hors de l'encoche 18 du loquet 16 de telle sorte que le loquet 16 vienne engager une deuxième partie saillante 15 de son bord périphérique dans le deuxième cran de retenue 86 du cliquet de rétention 80 de l'organe d'éjection 90. Le loquet 16 et le cliquet 22 sont alors dans leur configuration finale de déverrouillage (figure 9). Dans une variante non illustrée de l'invention, les parties 14 et 15 du loquet 16 peuvent être formées par une seule et même nervure.

Dans cet exemple, le loquet 16 pivote à l'intérieur de l'espace incurvé délimité par le bord interne périphérique du cliquet 22 et la portion de surface d'appui en forme d'arc de cercle du loquet 16 vient coopérer par contact avec la portion de surface d'appui complémentaire du cliquet 22. Le loquet 16 est alors entraîné en pivotement par l'éjecteur 50 jusqu'à ce que la gâche 100 soit libérée de l'encoche 18 (figure 10D).

On a représenté sur la figure 11, des étapes A à D de fermeture du capot du véhicule automobile. Initialement, l'agencement de serrure 10 est dans la configuration finale illustrée par la figure 9.

Dans cette configuration, le loquet 16 est en libération totale de la gâche 100. Le loquet 16 est retenu dans cette position de libération par le deuxième cran 86 du cliquet de rétention 80. Comme le loquet 16 et l'éjecteur 50 sont verrouillés en déplacement l'un par rapport à l'autre ou bien sont formés d'une seule pièce, l'éjecteur 50 est également dans une position éjectée dans laquelle le ressort d'assistance 52 exerce un couple élastique de rappel dans cette position éjectée. En outre, le cliquet 22 et le loquet 16 coopèrent ensemble par contact par leurs portions d'appui complémentaires.

Puis, au cours d'une étape 11A, l'usager du véhicule automobile applique un effort sur le capot du véhicule de sorte que la gâche 100 transmet cet effort à la came de levage 56 de l'éjecteur 50.

Ceci a pour effet de désengager le loquet 16 du deuxième cran de rétention 84 qui vient pivoter relativement au cliquet 22 par guidage de leurs portions d'appui respectives jusqu'à l'engagement du bec de verrouillage 34 du cliquet 22 à l'intérieur de la deuxième encoche de verrouillage 32 du loquet 16.

Enfin, au cours de l'étape 11D, la poursuite de l'effort exercé par l'usager sur le capot du véhicule automobile provoque le pivotement de l'organe d'éjection 90 jusqu'à ce que le loquet 16 franchisse le premier cran 84 de rétention du cliquet 80. La poursuite du pivotement du loquet 16 conduit également le cliquet 22 à se désengager du deuxième cran 32 jusqu'à atteindre le premier cran 30. En outre, le pivotement du loquet 16 vient également engager le relief à l'intérieur de la fourche du bloqueur 60 qui est alors entraîné depuis sa position de débrayage vers sa position d'embrayage à l'encontre de sa sollicitation élastique, dans le sens direct S1.

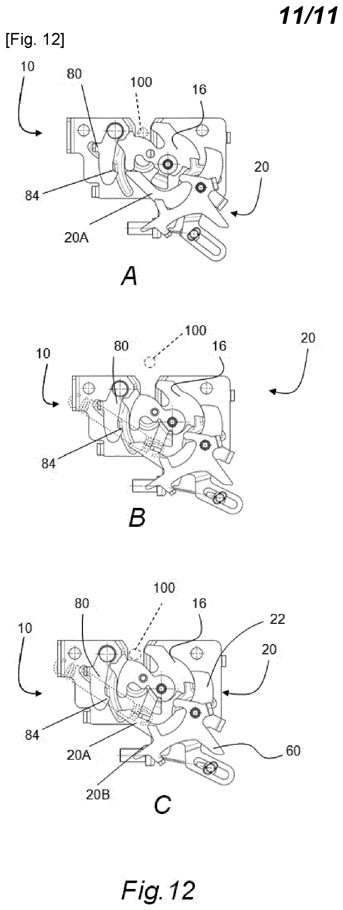

On a représenté sur la figure 12, trois étapes (A, B, C) de déverrouillage d'une variante de l'agencement de serrure 10. Dans cette variante, le cliquet 80 de rétention est dépourvu du deuxième cran 86 de retenue du loquet 16 dans la configuration finale. Le cliquet 80 comprend dans cette variante uniquement le premier cran 84 de rétention du loquet 16 dans la configuration intermédiaire. Dans ce cas, le loquet 16 est entraîné successivement par le ou les bras d'entraînement de l'organe de verrou 20 jusqu'à atteindre la configuration intermédiaire puis la configuration finale (étape A) de libération de la gâche 100. Dans cet exemple illustré, le loquet 16, et donc l'organe d'éjection 90, est entraîné dans la configuration intermédiaire par le bras d'entraînement 78 du bloqueur 60 jusqu'à venir coopérer avec le premier cran 84 de rétention du cliquet 80 par une première action de traction puis est entraîné dans la configuration finale par le bras d'entraînement 20B du cliquet 22 par une deuxième action de traction.

L'organe de verrou 20 est ainsi agencé pour faire pivoter l'organe d'éjection 90 dans un sens d'éjection à l'encontre du couple résultant du poids du capot exercé sur l'éjecteur 50 par l'intermédiaire de la gâche 100 afin de permettre le levage du capot.

L'utilisateur peut alors décider d'ouvrir complètement le capot du véhicule (étape B) car la gâche 100 est alors complètement dégagée de l'encoche 18.

Si l'utilisateur décide finalement de ne pas ouvrir le capot du véhicule ou en est empêché, cette variante offre une garantie de sécurité supplémentaire. Comme le cliquet 80 de rétention ne présente pas de cran de retenue de l'organe d'éjection 90 dans la configuration finale, lorsque le bras d'entraînement 20B du cliquet 22 est rappelé élastiquement avec le cliquet 22, l'organe d'éjection 90 n'est plus supporté par le bras d'entraînement 20B dans sa configuration finale. L'organe d'éjection 90 est alors entraîné en pivotement, depuis la configuration finale, par l'effet du couple résultant du poids du capot exercé par l'appui de la gâche 100 sur l'organe d'éjection 90, et en particulier, sur la came de levage 56 de l'éjecteur 50.

Dans ce cas, l'organe de verrou 20 est configuré pour laisser l'organe d'éjection 90 pivoter dans le sens opposé sous l'effet du couple résultant du poids du capot en cas d'absence d'intervention extérieure sur le capot du véhicule.

De préférence, l'organe de verrou 20 est configuré pour laisser l'organe d'éjection 90 pivoter dans le sens opposé jusqu'à atteindre la configuration intermédiaire sous l'effet du couple résultant du poids du capot en cas d'absence d'intervention extérieure sur le capot du véhicule. Dans l'exemple illustré, la rotation de l'organe d'éjection 90 dans le sens opposé au sens d'éjection amène automatiquement le loquet 16 jusqu'au cran intermédiaire 84 du cliquet de retenue 80.

Ceci permet d'améliorer encore la sécurité de l'agencement de serrure puisqu'une nouvelle action de commande de déplacement doit être émise pour éjecter la gâche 100 et permettre l'ouverture du capot.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après. En particulier, dans la présente description, les moyens élastiques décrits comprennent des ressorts de traction mais en variante, les moyens élastiques peuvent comprendre des ressorts de torsion ou tout autre moyen élastique connu dans l'art antérieur.

## Revendications

1. Agencement (10) de serrure pour un capot de véhicule automobile, comprenant un loquet (16) monté pivotant et comprenant une encoche (18) apte à coopérer avec le capot par engagement d'une gâche (100) du capot dans l'encoche (18), un organe de verrou (20) comprenant un cliquet (22) de verrouillage agencé pour coopérer avec le loquet (16) entre au moins une configuration initiale de verrouillage du loquet (16) en engagement total de la gâche (100) et une configuration finale de déverrouillage du loquet (16) en libération totale de la gâche (100), consécutivement à au moins une action de commande de déplacement du cliquet (22) par un actionneur (110), un éjecteur (50) agencé pour entraîner, avec son éjection, le pivotement du loquet (16) et le levage du capot, le loquet (16) et l'éjecteur (50) formant un organe (90) d'éjection de la gâche (100), **caractérisé en ce que** lors du déplacement du cliquet (22) de la configuration initiale à la configuration finale, l'organe de verrou (20) est agencé pour faire pivoter l'organe d'éjection (90) dans un sens d'éjection à l'encontre du couple résultant du poids du capot exercé sur l'éjecteur (50) par l'intermédiaire de la gâche (100) afin de permettre le levage du capot.

2. Agencement (10) selon la revendication précédente, comprenant un module d'assistance (52) prévu pour assister à l'effort de levage du capot à l'encontre du couple résultant du poids du capot.

3. Agencement (10) selon la revendication précédente, dans lequel le module d'assistance comprend un ressort d'assistance (52), couplé à l'éjecteur (50) tendant à faire pivoter l'éjecteur (50) dans le sens d'éjection, qui est sous-dimensionné de sorte que ledit ressort d'assistance (52) développe un couple de rappel élastique toujours inférieur au couple résultant du poids du capot.

4. Agencement (10) selon la revendication 1, dans lequel l'éjecteur (50) est monté libre en rotation.

5. Agencement (10) selon l'une quelconque des revendications précédentes, dans lequel l'organe de verrou (20) comprend au moins un bras d'entraînement (20A, 20B) de l'organe d'éjection (90) pour entraîner en pivotement l'organe d'éjection (90) dans un sens d'éjection.

6. Agencement (10) selon l'une quelconque des revendications précédentes, dans lequel l'organe de verrou (20) est configuré pour entraîner dans le sens d'éjection l'organe d'éjection (90) jusqu'à atteindre la configuration finale et est configuré pour laisser l'organe d'éjection (90) pivoter, à partir de la configuration finale, dans le sens opposé sous l'effet du couple résultant du poids du capot en cas d'absence d'intervention extérieure sur le capot du véhicule.

7. Agencement (10) selon la revendication précédente, dans lequel le cliquet (22) étant agencé pour coopérer avec le loquet (16) dans une configuration de verrouillage intermédiaire du loquet (16) en engagement partiel de la gâche (100), l'organe de verrou (20) est configuré pour laisser l'organe d'éjection (90) pivoter, à partir de la configuration finale, dans le sens opposé jusqu'à atteindre la configuration intermédiaire sous l'effet du couple résultant du poids du capot en cas d'absence d'intervention extérieure sur le capot du véhicule.

8. Agencement (10) selon l'une quelconque des revendications précédentes, dans lequel le cliquet (22) étant agencé pour coopérer avec le loquet (16) dans une configuration de verrouillage intermédiaire du loquet (16) en engagement partiel de la gâche (100) et étant sélectivement déplaçable de la configuration initiale à la configuration intermédiaire consécutivement à une première action de commande et de la configuration intermédiaire à la configuration finale consécutivement à une deuxième action de commande, l'organe de verrou (20) comprend un premier bras d'entraînement (20A) de l'organe d'éjection (90) lors de la première action et un deuxième bras d'entraînement (20B) de l'organe d'éjection (90) lors de la deuxième action.

9. Agencement (10) selon la revendication précédente, dans lequel le loquet (16) comprend un profil étagé délimitant des premier (30) et deuxième (32) crans coopérant avec le cliquet (22) respectivement dans les configurations initiale et intermédiaire.

10. Agencement (10) selon l'une quelconque des revendications précédentes, comprenant un cliquet (80) de rétention de l'organe d'éjection (50) dans la configuration intermédiaire et/ou dans la configuration finale, plus particulièrement le cliquet (80) comprenant au moins un cran (84, 86) de retenue d'un relief (14, 15) de l'organe d'éjection (90) dans la configuration intermédiaire.

11. Agencement (10) selon l'une quelconque des revendications précédentes, comprenant un actionneur (110) pourvu d'un élément d'actionneur (112) commandé en déplacement par l'actionneur (110) et relié au cliquet (22) pour entraîner dans son déplacement le cliquet (22) en pivotement, un bloqueur (60) de sécurité est agencé pour limiter une course de déplacement de l'élément (112) lors de la première action de commande, de manière à limiter une amplitude de pivotement du cliquet (22).

12. Agencement (10) selon la revendication précédente, dans lequel le loquet (16) est agencé dans la configuration initiale pour retenir le bloqueur (60) dans sa position d'embrayage à l'encontre de sa sollicitation élastique et le bloqueur (60) est agencé pour intercepter le loquet (16) en pivotement lors de la première action pour retenir le loquet (16) et le cliquet (22) dans la configuration intermédiaire.

13. Agencement (10) selon la revendication précédente, dans lequel le cliquet (22) et le bloqueur (60) sont montés pivotants indépendamment l'un de l'autre et sont sollicités élastiquement par des moyens élastiques dans un même sens de pivotement (S1).

14. Agencement (10) selon l'une quelconque des revendications précédentes, dans lequel le loquet (16) et l'éjecteur (50) sont raccordés entre eux afin de pivoter d'une manière verrouillée l'un par rapport à l'autre ou bien le loquet (16) et l'éjecteur (50) sont formés d'une seule pièce.

15. Véhicule automobile comprenant un capot et un agencement de serrure (10) apte à coopérer avec une gâche (100) montée sur le capot, **caractérisé en ce que** l'agencement (10) est conforme à l'une quelconque des revendications précédentes et est monté sur un châssis du véhicule automobile, en particulier, l'actionneur (110) étant motorisé électriquement.

## Patentansprüche

1. Schlossanordnung (10) für eine Motorhaube eines Kraftfahrzeugs, umfassend einen Riegel (16), der schwenkbar montiert ist und eine Kerbe (18) umfasst, die geeignet ist, mit der Motorhaube durch Eingriff eines Schließblechs (100) der Motorhaube in die Kerbe (18) zusammenzuwirken, ein Verriegelungsorgan (20), das eine Verriegelungsklinke (22) umfasst, die so angeordnet ist, dass sie mit dem Riegel (16) zwischen mindestens einer ursprünglichen Verriegelungskonfiguration des Riegels (16) bei vollständigem Eingriff des Schließblechs (100) und einer endgültigen Entriegelungskonfiguration des Riegels (16) bei vollständiger Freigabe des Schließblechs (100) zusammenwirkt, infolge mindestens einer Steueraktion zur Bewegung der Klinke (22) durch einen Aktuator (110), einen Auswerfer (50), der so angeordnet ist, dass er mit seinem Auswurf das Schwenken des Riegels (16) und das Anheben der Motorhaube bewirkt, wobei der Riegel (16) und der Auswerfer (50) ein Auswurforgan (90) für das Schließblech (100) bilden, **dadurch gekennzeichnet, dass** das Verriegelungsorgan (20) beim Bewegen der Klinke (22) von der ursprünglichen Konfiguration in die endgültige Konfiguration so angeordnet ist, dass es das Auswurforgan (90) in eine Auswurfrichtung gegen das Drehmoment schwenken lässt, das sich aus dem Gewicht der Motorhaube ergibt und über das Schließblech (100) auf den Auswerfer (50) ausgeübt wird, um das Anheben der Motorhaube zu ermöglichen.

2. Anordnung (10) nach dem vorhergehenden Anspruch, umfassend ein Unterstützungsmodul (52), das vorgesehen ist, um die Kraft zum Anheben der Motorhaube gegen das sich aus dem Gewicht der Motorhaube ergebende Drehmoment zu unterstützen.

3. Anordnung (10) nach dem vorhergehenden Anspruch, wobei das Unterstützungsmodul eine Unterstützungsfeder (52) umfasst, die mit dem Auswerfer (50) gekoppelt ist und dabei den Auswerfer (50) in Auswurfrichtung schwenken lässt, und die so unterdimensioniert ist, dass die Unterstützungsfeder (52) ein elastisches Rückstellmoment entwickelt, das immer geringer ist als das Drehmoment, das sich aus dem Gewicht der Motorhaube ergibt.

4. Anordnung (10) nach Anspruch 1, wobei der Auswerfer (50) frei drehbar montiert ist.

5. Anordnung (10) nach einem der vorhergehenden Ansprüche, wobei das Verriegelungsorgan (20) mindestens einen Mitnehmerarm (20A, 20B) des Auswurforgans (90) umfasst, um das Auswurforgan (90) in einer Auswurfrichtung schwenken zu lassen.

6. Anordnung (10) nach einem der vorhergehenden Ansprüche, wobei das Verriegelungsorgan (20) so eingerichtet ist, dass es das Auswurforgan (90) in Auswurfrichtung antreibt, bis die endgültige Konfiguration erreicht ist, und so eingerichtet ist, dass es das Auswurforgan (90) von der endgültigen Konfiguration ausgehend in die entgegengesetzte Richtung unter der Wirkung des Drehmoments schwenken lässt, das sich aus dem Gewicht der Motorhaube ergibt, wenn kein äußerer Eingriff an der Motorhaube des Fahrzeugs erfolgt.

7. Anordnung (10) nach dem vorhergehenden Anspruch, wobei die Klinke (22) so angeordnet ist, dass sie in einer mittleren Verriegelungskonfiguration des Riegels (16) bei teilweisem Eingriff des Schließblechs (100) mit dem Riegel (16) zusammenwirkt, wobei das Verriegelungsorgan (20) so eingerichtet ist, dass es das Auswurforgan (90) aus der endgültigen Konfiguration in die entgegengesetzte Richtung schwenken lässt, bis es die mittlere Konfiguration unter der Wirkung des durch das Gewicht der Motorhaube ergebenden Drehmoments erreicht, wenn kein äußerer Eingriff an der Motorhaube des Fahrzeugs vorgenommen wird.

8. Anordnung (10) nach einem der vorhergehenden Ansprüche, wobei die Klinke (22) so angeordnet ist, dass sie in einer mittleren Verriegelungskonfiguration des Riegels (16) bei teilweisem Eingriff des Schließblechs (100) mit dem Riegel (16) zusammenwirkt, und wahlweise von der ursprünglichen Konfiguration zur mittleren Konfiguration infolge einer ersten Steueraktion und von der mittleren Konfiguration zur endgültigen Konfiguration infolge einer zweiten Steueraktion verschoben werden kann, wobei das Verriegelungsorgan (20) einen ersten Mitnehmerarm (20A) des Auswurforgans (90) bei der ersten Aktion und einen zweiten Mitnehmerarm (20B) des Auswurforgans (90) bei der zweiten Aktion umfasst.

9. Anordnung (10) nach dem vorhergehenden Anspruch, wobei der Riegel (16) ein Stufenprofil umfasst, das eine erste (30) und eine zweite (32) Raste begrenzt, die in der ursprünglichen beziehungsweise mittleren Konfiguration mit der Klinke (22) zusammenwirken.

10. Anordnung (10) nach einem der vorhergehenden Ansprüche, umfassend eine Klinke (80) zum Halten des Auswurforgans (50) in der mittleren Konfiguration und/oder in der endgültigen Konfiguration, wobei insbesondere die Klinke (80) mindestens eine Raste (84, 86) zum Zurückhalten einer Erhebung (14, 15) des Auswurforgans (90) in der mittleren Konfiguration umfasst.

11. Anordnung (10) nach einem der vorhergehenden Ansprüche, umfassend einen Aktuator (110), der mit einem von dem Aktuator (110) beweglich gesteuerten Aktuatorelement (112) versehen und mit der Klinke (22) verbunden ist, um die Klinke (22) in ihrer Bewegung schwenkbar zu bewegen, wobei eine Sicherheitssperre (60) so angeordnet ist, dass sie einen Verschiebeweg des Elements (112) bei der ersten Steueraktion begrenzt, um einen Schwenkbereich der Klinke (22) zu begrenzen.

12. Anordnung (10) nach dem vorhergehenden Anspruch, wobei der Riegel (16) in der ursprünglichen Konfiguration angeordnet ist, um die Sperre (60) in ihrer Kupplungsposition entgegen ihrer elastischen Beanspruchung zu halten, und die Sperre (60) so angeordnet ist, dass sie den Riegel (16) bei der ersten Aktion beim Schwenken abfängt, um den Riegel (16) und die Klinke (22) in der mittleren Konfiguration zu halten.

13. Anordnung (10) nach dem vorhergehenden Anspruch, wobei die Klinke (22) und die Sperre (60) unabhängig voneinander schwenkbar montiert sind und durch elastische Mittel in derselben Schwenkrichtung (S1) elastisch belastet werden.

14. Anordnung (10) nach einem der vorhergehenden Ansprüche, wobei der Riegel (16) und der Auswerfer (50) miteinander verbunden sind, um verriegelt zueinander zu schwenken, oder die Verriegelung (16) und der Auswerfer (50) aus einem Stück gebildet sind.

15. Kraftfahrzeug, umfassend eine Motorhaube und eine Schlossanordnung (10), die mit einem auf der Motorhaube montierten Schließblech (100) zusammenwirken kann, **dadurch gekennzeichnet, dass** die Anordnung (10) einem der vorhergehenden Ansprüche entspricht und an einem Fahrgestell des Kraftfahrzeugs montiert ist, wobei insbesondere der Aktuator (110) elektrisch motorisiert ist.

## Claims

1. Lock arrangement (10) for a motor vehicle hood, comprising a latch (16) that is pivotally mounted and that comprises a notch (18) capable of cooperating with the hood by engaging a striker (100) of the hood in the notch (18), a lock member (20) comprising a locking ratchet (22) arranged to cooperate with the latch (16) between at least one initial locking configuration of the latch (16) with the striker (100) fully engaged and a final unlocking configuration of the latch (16) with the striker (100) fully released, following at least one movement control action of the ratchet (22) by an actuator (110), an ejector (50) arranged to drive, with the ejection thereof, the pivoting of the latch (16) and the lifting of the hood, the latch (16) and the ejector (50) forming a striker (100) ejection member (90), **characterized in that** during the movement of the ratchet (22) from the initial configuration to the final configuration, the lock member (20) is arranged to pivot the ejection member (90) in an ejection direction against the resultant torque of the weight of the hood exerted on the ejector (50) via the striker (100) in order to enable the lifting of the hood.

2. Arrangement (10) according to the preceding claim, comprising an assistance module (52) provided to assist with the force of lifting the hood against the resultant torque of the weight of the hood.

3. Arrangement (10) according to the preceding claim, wherein the assistance module comprises an assistance spring (52), coupled with the ejector (50) tending to pivot the ejector (50) in the ejection direction, which is undersized such that said assistance spring (52) develops an elastic return torque always less than the resultant torque of the weight of the hood.

4. Arrangement (10) according to claim 1, wherein the ejector (50) is mounted free in rotation.

5. Arrangement (10) according to any one of the preceding claims, wherein the lock member (20) comprises at least one arm (20A, 20B) for driving the ejection member (90) to pivot the ejection member (90) in an ejection direction.

6. Arrangement (10) according to any one of the preceding claims, wherein the lock member (20) is configured to drive in the ejection direction the ejection member (90) until the final configuration is reached and is configured to allow the ejection member (90) to pivot, from the final configuration, in the opposite direction under the effect of the resultant torque of the weight of the hood in the absence of external intervention on the vehicle hood.

7. Arrangement (10) according to the preceding claim, wherein the ratchet (22) being arranged to cooperate with the latch (16) in an intermediate locking configuration of the latch (16) partially engaging the striker (100), the lock member (20) is configured to allow the ejection member (90) to pivot from the final configuration in the opposite direction, until the intermediate configuration is reached under the effect of the resultant torque of the weight of the hood in the absence of external intervention on the vehicle hood.

8. Arrangement (10) according to any one of the preceding claims, wherein the ratchet (22) being arranged to cooperate with the latch (16) in an intermediate locking configuration of the latch (16) partially engaging the striker (100) and being selectively movable from the initial configuration to the intermediate configuration following a first control action and from the intermediate configuration to the final configuration following a second control action, the lock member (20) comprises a first arm (20A) for driving the ejection member (90) during the first action and a second arm (20B) for driving the ejection member (90) during the second action.

9. Arrangement (10) according to the preceding claim, wherein the latch (16) comprises a staged profile delimiting the first (30) and the second (32) catch cooperating with the ratchet (22) respectively in the initial and in the intermediate configuration.

10. Arrangement (10) according to any one of the preceding claims, comprising a ratchet (80) for holding the ejection member (50) in the intermediate configuration and/or in the final configuration, more particularly the ratchet (80) comprising at least one notch (84, 86) for holding a relief (14, 15) of the ejection member (90) in the intermediate configuration.

11. Arrangement (10) according to any one of the preceding claims, comprising an actuator (110) provided with an actuator element (112) controlled in movement by the actuator (110) and connected to the ratchet (22) to drive the ratchet (22) in its pivoting movement, a safety lock (60) is arranged to limit a movement travel of the element (112) during the first control action, so as to limit a pivoting amplitude of the ratchet (22).

12. Arrangement (10) according to the preceding claim, wherein the latch (16) is arranged in the initial configuration to hold the lock (60) in the engagement position thereof against the elastic stress thereof and the safety lock (60) is arranged to intercept the latch (16) in pivoting during the first action to hold the latch (16) and the ratchet (22) in the intermediate configuration.

13. Arrangement (10) according to preceding claim, wherein the ratchet (22) and the safety lock (60) are pivotally mounted independently of each other and are elastically stressed by elastic means in the same pivoting direction (S1).

14. Arrangement (10) according to any one of the preceding claims, wherein the latch (16) and the ejector (50) are connected to each other in order to pivot in a locked manner with respect to each other or the latch (16) and the ejector (50) are formed of one piece.

15. Motor vehicle comprising a hood and a lock arrangement (10) capable of cooperating with a striker (100) mounted on the hood, **characterized in that** the arrangement (10) is according to any one of the preceding claims and is mounted on a chassis of the motor vehicle, in particular the actuator (110) being electrically motorized.
